# EUROPÄISCHE PATENTSCHRIFT

(11) **EP 0 558 922 B1**
(45) Veröffentlichungstag und Bekanntmachung des Hinweises auf die Patenterteilung: **18.12.1996**
(21) Anmeldenummer: 93101352.8
(22) Anmeldetag: 29.01.1993
(51) Int. Cl.: H04N 5/14, H04N 7/32

(54) **Verfahren zur Verbesserung der Bewegungsschätzung in bewegten Bildsequenzen in Halbpelgenauigkeit**
Method for improving motion estimation in a motion picture sequence with half pel precision
Méthode pour améliorer l'estimation du mouvement d'une séquence d'images animées avec une précision d'un demi pixel

(30) Priorität: 03.03.1992 DE 4206622
(43) Veröffentlichungstag der Anmeldung: 08.09.1993
(73) Patentinhaber: Bundesrepublik Deutschland, vertr. durch Vorstand der D. Bundespost TELEKOM, vertr. durch Präs. des Fernmeldetechn. Z.amtes, D-64276 Darmstadt (DE)
(72) Erfinder: Knoll, Angelika, Dr. rer. nat., W-6100 Darmstadt (DE)

(56) Entgegenhaltungen:
- EP-A- 0 446 001
- GB-A- 2 236 449
- VISUAL COMMUNICATIONS AND IMAGE PROCESSING'91:VISUAL COMMUNICATION Bd. 1605, 13. November 1991, BOSTON(US) Seiten 805 - 810 JOHN W. WOODS ET AL. "Hierarchical Motion Compensated De-interlacing"
- SIGNAL PROCESSING IMAGE COMMUNICATION Bd. 1, Nr. 2, Oktober 1989, AMSTERDAM (NL) Seiten 191 - 212 THOMA R. ET AL. 'MOTION COMPENSATING INTERPOLATION CONSIDERING COVERED AND UNCOVERED BACKGROUND'
- IEEE INTERNATIONAL CONFERENCE ON ACOUSTICS,SPEECH AND SIGNAL PROCESSING Bd. 3, 26. Mai 1989, GLASGOW (UK) Seiten 1819 - 1822 H. GHAVARI 'DIFFERENTIAL SUB-BAND CODING OF VIDEO SIGNALS'
- PATENT ABSTRACTS OF JAPAN (E-1197)6. Mai 1992 & JP-A-40 23 594 (OKI ELECTRIC IND. CO. LTD.

## Beschreibung

Die Erfindung betrifft ein verfahren zur Verbesserung der Bewegungsschätzung in Halbpelgenauigkeit basierend auf der vollständigen Suchmethode (full search) oder einem Zwei bis Mehrschrittsuchverfahren (z. B. log (D) step search) in bewegten Bildsequenzen.

Bei der Codierung von Bildsequenzen für die Bildübertragung von HDTV bis Bildfernsprechen, im interaktiven Multimediabereich oder bei einer qualitativ hochwertigen Normwandlung für Bewegtbildszenen, spielen Bewegungsvektoren eine zentrale Rolle. Durch den Vergleich zweier aufeinanderfolgender Bilder kann die Verschiebung eines Objektes von einem zum nächsten Bild bestimmt werden. Hierbei wird das Bild üblicherweise in Blöcke aufgeteilt mit Blockgrößen von 8 x 8 bis 16 x 16 Bildpunkten. Die Blockgröße spielt jedoch im folgenden keine Rolle. Die so gewonnenen Verschiebungs- bzw. Bewegungsvektorenwerden bei Bitratenreduktionstechniken vom Sender zum Empfänger übertragen und im Empfänger zur Rekonstruktion eines Bildes auf der Basis des vorhergehenden benutzt. Bei Normwandlungen werden sie benutzt, um zeitlich dazwischenliegende Bilder zu erzeugen.

Für die Bestimmung der Bewegungsvektoren werden im allgemeinen zwei Verfahren eingesetzt: 1. die Phasenkorrelationsmethode oder 2. die Suchmethode, die aufgeteilt werden kann in Einschrittverfahren (vollständige Suchmethode (full search method)), in Zweischrittverfahren oder in Mehrschrittverfahren (z. B. log (D) step search).

Der Suchmethode liegt folgender Ablauf zu Grunde: Adressgeneratoren bestimmen die Adresse der ersten Position im Suchbereich und die Adresse des Matchblockes. Die Differenz je zweier zugeordneter Pixelwerte wird betragsmßig oder auch quadratisch aufsummiert und gibt dann ein Maß für die Abweichung des Matchblockes vom entsprechenden Block im Suchbereich. Abweichung und Position im Suchbereich werden gespeichert. Für die nächste Position im Suchbereich wird ebenfalls die Abweichung berechnet. Das Minimum von bereits gespeicherter und neu berechneter Abweichung mit der dazugehörigen Position wird gespeichert. Sind alle Positionen des Suchbereiches durchlaufen, wird die minimale Abweichung mit der entsprechenden Position ausgegeben.

Beim Suchverfahren in Halbpelgenauigkeit in ein oder mehreren Schritten müssen Zwischenpixelwerte interpoliert werden. Die Originalpixelwerte bleiben unverändert. Ein solches Verfahren ist aus GB-A-2 236 449 bekannt. Beim Einschrittverfahren (vollständige Suchmethode) werden im gesamten Suchbereich die Zwischenpixelwerte interpoliert. Danach wird in einem Matchprozess wie er oben beschrieben ist, die Lage der besten Übereinstimmung ermittelt. Die Positionierungsänderung ist dabei jeweils 1/2 pel Abstand. Bei Zweischrittverfahren wird erst auf den Originalbildern die Lage der besten Übereinstimmung ermittelt und dann die Halbpelumgebung abgesucht. Bei Mehrschrittverfahren wird erst auf gefilterten und unterabgetasteten Bildern der Ort der besten Übereinstimmung ermitteltund dann in der Umgebung des jeweils gefundenen Punktes weitergesucht.

Im folgenden werden Bewegungsvektoren, deren horizontale (x-) oder vertikale (y-) Komponente eine Länge von einem geradzahligen Vielfachen von 1/2 pel Abstand aufweist (also 0 pel,±1 pel, ±2 pel, ...), eine ganzpel x- bzw. y-Komponente genannt. Bewegungsvektoren, deren horizontale (x-) oder vertikale (y-) Komponente eine Länge von einem ungeradzahligen Vielfachen von 1/2 pel Abstand aufweist (also ±1/2 pel, ±3/2 pel, ...)werden eine halbpel x- oder y-Komponente genannt.

Die bisherigen Verfahren haben auf Grund statistischer Eigenschaften stark unterschiedliche Wahrscheinlichkeiten für das Auftreten eines Bewegungsvektors mit halbpel x- oder y-Komponente und eines Bewegungsvektors mit ganzpel x- oder y-Komponente. Werden auf Grund des vorliegenden Bildmaterials etwa gleich viele Bewegungsvektoren mit halbpel x- bzw. y-Komponente und mit ganzpel x- bzw. y-Komponente erwartet, so zeigt sich, daß bei den bisherigen Suchverfahren dies nicht der Fall ist, wobei es natürlich zufällig möglich ist, daß diese unterschiedliche Wahrscheinlichkeit nicht zu Tage tritt. Beim vollständigen Einschrittsuchverfahren treten erheblich mehr Bewegungsvektoren mit halbpel Komponenten auf.

Am deutlichsten ist dies bei Rauschbildern, d. h. Bildern, bei denen Nachbarpixel unkorreliert sind und jeder Pixel den Wert zwischen 0 und 255 mit gleicher Wahrscheinlichkeit annehmen kann (rechteckförmige Verteilung). Wird jetzt die Wahrscheinlichkeitsverteilung eines aus 2 Nachbarpixeln linear interpolierten Zwischenpixelwertes berechnet, so ergibt sich eine dreiecksförmige Verteilung. Mittlere Pixelwerte sind also wesentlich wahrscheinlicher als sehr kleine oder sehr große Pixelwerte.

Auch eine bessere als die lineare Interpolation ergibt eine von der rechteckförmigen Verteilung stark abweichende Verteilkurve (wird zur Interpolation ein Filter mit der vollen rechteckförmigen Frequenzcharakteristik herangezogen, so hat die sich ergebende Verteilung Ähnlichkeiten mit einer Glockenkurve).

Beim Matchprozeß werden jetzt Blöcke mit unterschiedlichen Wahrscheinlichkeitsverteilungen verglichen.

Auch normale Bildsequenzen haben unterschiedliche Wahrscheinlichkeitsverteilungen an Pixel- und Zwischenpixelwerten, diezu einer unterschiedlichen Wahrscheinlichkeit für das Auftreten von halbpel oder ganzpel Komponenten der Bewegungsvektoren führen und damit das Bewegungsvektorfeld verfälschen. Die technische Aufgabe, die gelöst werden soll, besteht darin, ein Verfahren zur Verbesserung der Bewegungsschätzung in bewegten Bildsequenzen zu entwickeln, durch das die bei den bisher bekannten Verfahren möglichen Verfälschungen des Bewegungsvektorfeldes, die durch die unterschiedlichen Wahrscheinlichkeitsverteilungen an Pixel- und Zwischenpixelwerten bedingt sind, vermieden werden. Die technische Aufgabe wird mittels eines Verfahrens gelöst, bei dem in einem ersten Verfahrensschritt der Suchbereich und in einem zweiten Verfahrensschritt der Matchblock gefiltert werden. Das geschieht mittels eines zusätzlichen digitalen Filters,das eine Rasterverschiebung des Originalrasters um 1/4 pel, sowohl in horizontale als auch in vertikale Richtung, ermöglicht. Nach den erfindungsgemäßen Verfahrensschritten der Vorfilterung findet dann der eigentliche Matchprozeß für den Blockmatchingprozeß mit den Pixelwerten des gefilterten Suchbereiches und des gefilterten Matchblockes (im verschobenen Raster) statt.

Die erfindungsgemäße Lösung wird anhand eines Ausführungsbeispiels näher erläutert. Dabei zeigt:
- Fig. 1: eine Abbildung des Schemas des erfindungsgemäßen Verfahrens in Halbpelgenauigkeit mit Vorfilterung
- Fig. 2: eine Abbildung des Schemas des bekannten vollständigen Suchverfahrens mit Interpolation der Zwischenpixelwerte
- Fig. 3: das Originalraster mit Zwischenrasterpunkten im Suchbereich nach dem bereits bekannten Verfahren mit Interpolation der Zwischenpixelwerte
- Fig. 4: das Originalraster und das phasenverschobene Raster im Suchbereich nach dem erfindungsgemäßen Verfahren
- Fig. 5: das Originalraster und das phasenverschobene Raster für den Matchblock nach dem erfindungsgemäßen Verfahren

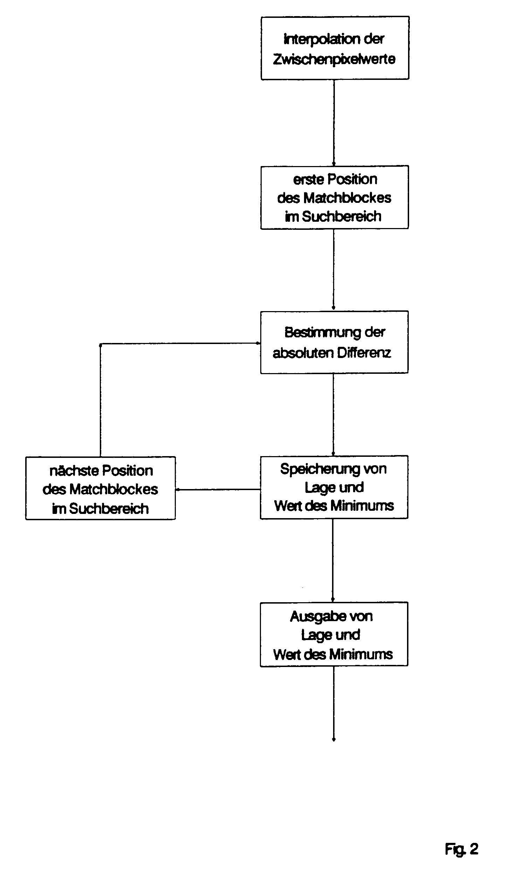

Die bisher bekannte Suchmethode ist in Fig. 2 dargestellt. Diese Suchmethode kann in Bezug auf den ersten Verfahrensschritt, der die Interpolation der Zwischenpixelwerte beinhaltet, im Einschrittverfahren (vollständige Suchmethode; full search method), im Zweischrittverfahren oder im Mehrschrittverfahren (z. B. log (D)step search) durchgeführt werden. Die Originalpixelwerte 1 bleiben dabei unverändert. Der sich an die Interpolation der Zwischenpixelwerte 2 anschließende eigentliche, bereits bekannte Matchprozeß läuft nach folgenden Verfahrensschritten ab:
- durch Adreßgeneratoren wird die Adresse der ersten Position im Suchbereich und die Adresse des Matchblockes bestimmt,
- die Differenz je zweier zugeordneter Pixelwerte wird betragsmäßig oder quadratisch aufsummiert und gibt dann ein Maß für die Abweichung des Matchblockes vom entsprechenden Block im Suchbereich an,
- Abweichung und Position im Suchbereich werden gespeichert,
- für die nächste Position im Suchbereich wird ebenfalls die Abweichung ermittelt. Das Minimum von bereits gespeicherter und neu ermittelter Abweichung mit der dazugehörigen Position wird gespeichert.
- wenn alle Positionen des Suchbereiches durchlaufen sind, wird die minimale Abweichung mit der entsprechenden Position ausgegeben.

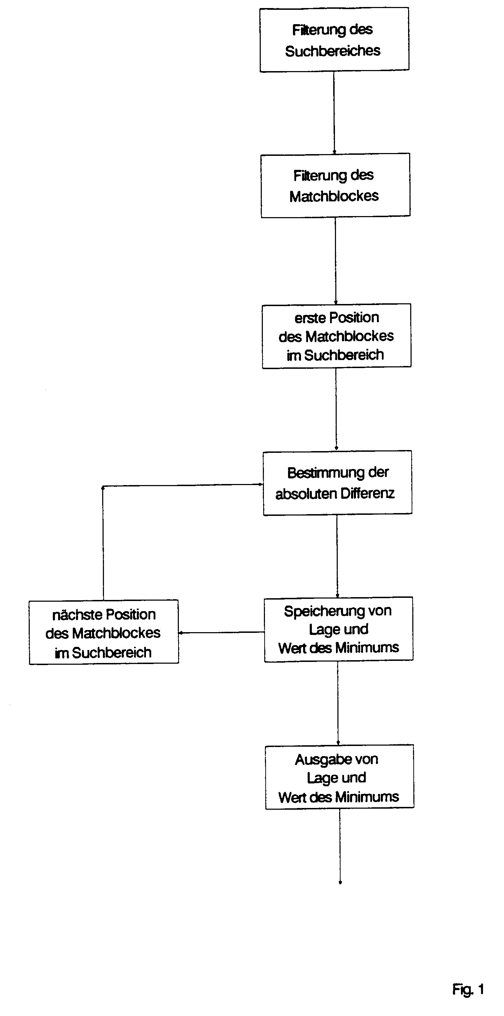

In Figur 1 ist eine Abbildung des Schemas des erfindungsgemäßen Verfahrens enthalten. Hierbei erfolgt vor dem oben beschriebenen bekannten Matchprozeß, anstatt der Interpolation der Zwischenpixelwerte, mittels eines geeigneten digitalen Filters, in einem ersten Verfahrensschritt eine Filterung des Suchbereiches und in einem zweiten Verfahrensschritt eine Filterung des Matchblockes.

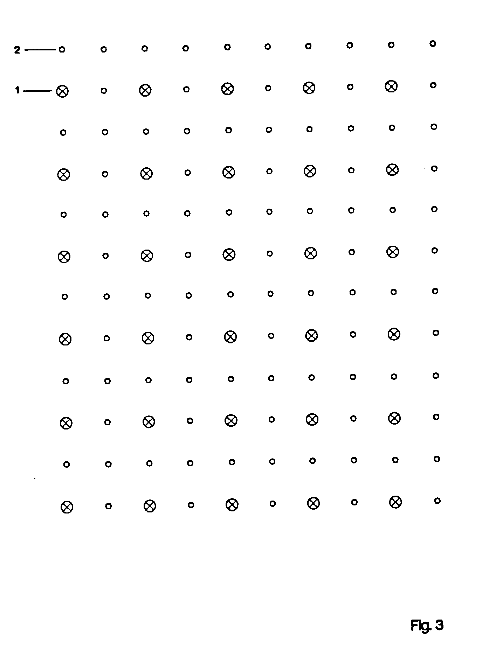

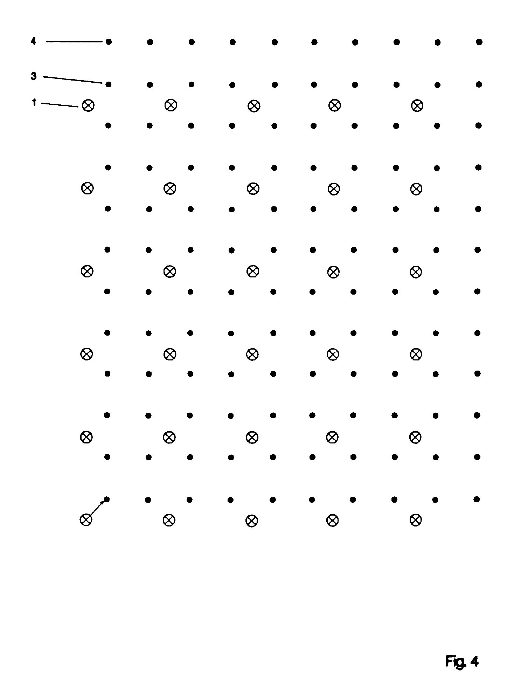

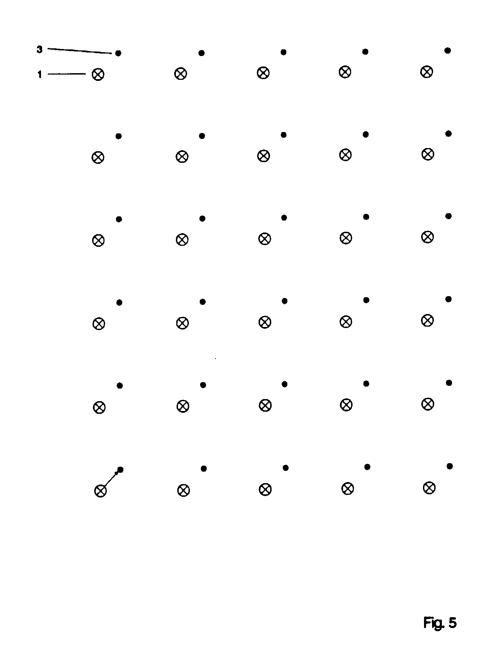

Durch diese zusätzlichen Schritte ist es möglich, die unterschiedlichen Wahrscheinlichkeitsverteilungen und damit die Verfälschung des Bewegungsvektorfeldes auszuschließen. Bei der Filterung des Suchbereiches kann folgendermaßen vorgegangen werden: Die Zwischenpixelwerte werden als Punkte mit dem Wert 0 eingefügt. In bisherigen Anwendungen wurden dann Zwischenrasterpunkte 2 - wie in Fig. 3 dargestellt - erzeugt.Das hier dagegen vorzugsweise zur Anwendung kommende digitale FIR-Filter muß die Eigenschaft haben, das Originalraster zu verschieben, wobei die Verschiebung in der Größenordnung von 1/4 pel Abstand liegen sollte, wie in Fig. 4 für den Suchbereich und in Fig. 5 für den Matchblock verdeutlicht.

Die Zwischenpixelwerte 3 im Suchbereich unterliegen ebenfalls der Phasenverschiebung und werden üblicherweise bei der Filterung gleich mitbestimmt. Das sich dann ergebende Raster ist in Fig. 4 dargestellt. Für einen Pixel ist die Verschiebung durch einen kleinen Pfeil dargestellt. Wird vom engmaschigen Raster des aufgeblähten Suchbereiches aus Fig. 3 ausgegangen, so wird das Raster in Figur 4 durch eine Filterung mit einem Filter der Phase 180^{o} (mod 360^{o}) gewonnen. Im aufgeblähten Raster bewirkt dieses Filter eine Verschiebung um 1/2 pel, wogegen im nichtaufgeblähten ursprünglichen Raster die Verschiebung 1/4 pel beträgt.

Als derartige Filter mit einer Rasterverschiebung von 1/2 pel (bzw. 1/4 pel ) werden beispielsweise symmetrische QMF-Filter mit geradzahliger Koeffizientenzahl verwendet, deren Symmetriepunkt zwischen den 2 mittleren Koeffizienten liegt. Eine der beiden Polyphasenkomponenten des Filters ändert die Originalpixelwerte 1, die andere Polyphasenkomponente berechnet die Zwischenpixelwerte 3.

Bei der Filterung des Matchblockes ist es am sinnvollsten, die Polyphasenkomponente zu benutzen, mit der im Suchbereich die Originalpixelwerte 1 gefiltert wurden. Die Filter bewirken eine horizontale und vertikale Verschiebung des Bildes um 1/4 pel (Fig. 5). Dies geschieht gleichmäßig im Suchbereich und im Matchblock, so daß eine Verschiebung keinen Einfluß auf die Bewegungsvektoren hat. Wird die andere Polyphasenkomponente benutzt, müssen die Bewegungsvektoren entsprechend geändert werden. Bei Benutzung anderer Filter ist es wesentlich, daß die Phasenverschiebung im Originalraster etwa 90^{o} oder 1/4 pel beträgt.

Der eigentliche Matchprozeß für den Blockmatchingprozeß findet dann mit den Pixelwerten 3 und 4 des gefilterten Suchbereiches und den Pixelwerten 3 des gefilterten Matchblockes (im verschobenen Raster) statt. Der wesentliche Punkt ist somit die Vorfilterung des Suchbereiches und des Matchblockes mit Filtern, die eine Rasterverschiebung des Originalrasters 1 um 1/4 pel Abstand bewirken. Dieses Ver fahren ist auf 1/2 pel genaue Bewegungsschätzung beschränkt. Nach einer solchen Vorfilterung ist die Wahrscheinlichkeitsverteilung von Rauschbildern für alle Pixelorte gleich und man erhält halbpel und ganzpel Komponenten der Bewegungsvektoren mit gleicher Wahrscheinlichkeit. Auch bei natürlichen Bildsequenzen wird die Genauigkeit der Bewegungsvektoren mit diesem Verfahren erhöht.

Bei Zwei- oder Mehrschrittverfahren wird erst ein pelgenauer Bewegungsvektor mit bisher üblichen Methoden bestimmt. Vor dem letzten Schritt zur Bestimmung der Bewegungsvektoren auf halbpel-Genauigkeit werden Suchbereich und Matchblock nach oben angegebenem Verfahren gefiltert.

## Patentansprüche

1. Verfahren zur Verbesserung der Bewegungsschätzung in bewegten Bildsequenzen in Halbpelgenauigkeit mit vollständiger Suchmethode im Einschritt-, Zweischritt und Mehrschrittverfahren dadurch gekennzeichnet, daß vor dem eigentlichen Blockmatchingprozeß mittels eines digitalen Filters,das sowohl eine horizontale als auch eine vertikale Rasterverschiebung des Originalrasters um 1/4 pel bewirkt, in einem ersten Verfahrenssschritt der Suchbereich und in einem zweiten Verfahrensschritt der Matchblock gefiltert werden, wobei im Suchbereich mittels einer Polyphasenkomponente des digitalen Filters die Originalpixelwerte geändert und mittels der anderen Polyphasenkomponente die Zwischenpixelwerte erzeugt werden, und wobei anschließend im Matchblock vorzugsweise mit der Polyphasenkomponente des digitalen Filters gefiltert wird, mit der im Suchbereich die Originalpixelwerte gefiltert wurden.

## Claims

1. Procedure for an improved estimation of motion in moving picture sequences with half-pel accuracy combined with a full search or a two-step or multiple-step search method, characterized by the fact that, prior to the actual block matching process, a digital filter, which causes both a horizontal and a vertical displacement of the original grid by ¼ pel, filters the search area in a first step and the match block in a second step; the original pixel values being changed in the search area by means of a poly-phase component of the digital filter and the intermediate pixel values generated by means of the other poly-phase component, and subsequent filtering in the match block being preferably carried out by means of that poly-phase component of the digital filter which has been used to filter the original pixel values in the search area.

## Revendications

1. Méthode pour améliorer l'estimation du mouvement dans les séquences d'images animées, avec la précision d'un semi-élément d'image ("semi-pel"), basée sur une méthode de recherche à un seul échelon, à deux échelons et à plusieurs échelons, caractérisée par le fait qu'avant le processus de comparaison de bloc proprement dit, on filtre la zone de recherche dans une première opération, puis, dans une deuxième opération, le bloc de comparaison, à l'aide d'un filtre numérique qui provoque un décalage de trame d'un quart de pel aussi bien dans le sens horizontal que vertical, fonctionnant de telle manière que, dans la zone de recherche, les valeurs d'origine de pixel soient changées moyennant une composante polyphasée du filtre numérique, et que les valeurs de pixel intermédiaires soient créées par l'autre composante polyphasée, et suivant le principe, de procéder ensuite au filtrage dans le bloc de comparaison, de préférence avec la même composante polyphasée du filtre numérique au moyen de laquelle les valeurs d'origine de pixel ont été filtrées dans la zone de recherche.
